# EUROPEAN PATENT APPLICATION

(11) **EP 4 644 585 A1**
(43) Date of publication of application: **05.11.2025**
(21) Application number: 24173530.7
(22) Date of filing: 30.04.2024
(51) Int. Cl.: C25B 1/23, B01D 53/62, C25B 9/21, C25B 11/032, C25B 11/042, C25B 15/08

(54) **ELECTROCHEMICAL PRODUCTION OF SYNGAS AND RELATED METHODS**

(71) Applicant: VITO NV, 2400 Mol (BE)
(72) Inventor: SONG, Jia, 2400 Mol (BE); PANT, Deepak, 2400 Mol (BE); BULUT, Metin, 2400 Mol (BE); BIRDJA, Yuvraj, 2400 Mol (BE); VAES, Jan, 2400 Mol (BE)
(74) Representative: AWA Benelux

(57) **Abstract**

The present invention relates to a method for producing a syngas mixture, comprising: removing CO₂ from air by exposing the air to a carbon depleted alkaline catholyte capturing solution, thereby obtaining a carbon enriched catholyte capturing solution comprising HCO₃⁻; feeding the carbon enriched catholyte capturing solution comprising HCO₃⁻ to a catholyte compartment of an electrolyser which further comprises an anolyte compartment comprising an anolyte solution and a middle layer compartment provided between the catholyte compartment and the anolyte compartment and comprising a middle layer solution; electrolysing a first portion of the HCO₃⁻, thereby forming a syngas mixture, and electrolysing the anolyte solution to produce protons (H⁺); migrating a second portion of the HCO₃⁻ from the catholyte compartment to the middle layer compartment, and migrating protons from the anolyte compartment to the middle layer compartment; acidifying the migrated HCO₃⁻ with the protons, thereby forming CO₂. The invention further relates to a system for performing such a method.

## Description

### Technical field

The present invention is related to the electrochemical production of syngas using a bicarbonate solution. It involves a catholyte-capturing solution recirculating system equipped with an electrolyser that internally generates high-purity CO₂.

### Background art

The increasing levels of carbon dioxide (CO₂) in the atmosphere is a pressing environmental concern. Various methods have been developed to capture CO₂ from point sources and the atmosphere - in short from the air - and to store the captured CO₂. Amongst these, direct air capture (DAC) systems have gained interest. These systems capture (remove) CO₂ directly from the air by employing chemical processes or sorbents, such as high-alkalinity solutions, to capture CO2.

However, one of their shortcomings is that releasing the captured CO₂ from the sorbents/solutions requires a high energy consumption, which negatively impacts the overall energy efficiency of the process and may even render them less economically viable compared to other CO₂ removal processes. Furthermore, the use or storage of the captured CO₂ for further applications often requires additional steps and resources.

One such further application is the production of syngas, i.e. a mixture of carbon monoxide, hydrogen, methane, carbon dioxide, and water vapor. Traditional methods of syngas production, such as steam reforming or partial oxidation of hydrocarbons often involve complex processes and a high energy consumption. Further, they may produce harmful by-products or pollutants, contributing to environmental and health concerns.

*Syngas production from electrochemical reduction of CO2: Current status and prospective* implementation, S. Hernández, M. Amin Farkhondehfal et al., Green Chemistry, Issue 10, 2017, https://doi.org/10.1039/C7GC00398F, gives an overview of existing electrolysis processes combining the reduction of carbon dioxide and the hydrogen evolution reaction from the reduction of water or protons for the production of syngas. The electrochemical reduction of CO₂ in an aqueous solution results in the formation of carbon monoxide, formic acid, methane and other hydrocarbons, and despite a higher cell potential to initiate the reduction reaction, the required cell potential for this reaction is minimal (1.47 V to 1.94 V if water oxidation is the anodic reaction). Typical electrolyser set-ups show that the cathode and the anode side are kept separated and that there is not interaction between them.

A disadvantage of the foregoing system is that the purity of the syngas is sub-optimal, thus requiring further downstream purification operations. Therefore, there is a need for a more efficient and sustainable process for capturing CO₂ from the atmosphere and utilizing it for syngas production.

### Summary of the invention

The present invention aims to overcome one or more of the above drawbacks. It is an aim to provide a process for syngas production which uses CO₂ captured from an air flow comprising CO₂, such as from point sources or the atmosphere, hereinafter the air, i.e. a process that combines capturing CO₂ from the air and producing syngas. It is a further aim to provide such a process which has a reduced energy consumption when compared to CO₂ capture processes and syngas processes known in the art, thereby rendering the process more energy efficient as well as more environmentally friendly (i.e. more sustainable). Yet another aim is to provide a process of producing syngas, the syngas having a high purity, in particular any carbon monoxide and carbon dioxide comprised in the syngas. In other words, the processes aim to both remove carbon dioxide from the air and to produce a high quality syngas. It is a further aim to provide such as process, which has a low production of harmful by-products or pollutants, thereby reducing its environmental footprint.

It is a further aim of the invention to provide an apparatus for performing or carrying out such process of combined CO₂ capturing and syngas production.

The terms "syngas" and "syngas mixture" are used interchangeably in the present disclosure.

The term "high purity gas" is used in the present disclosure for a gas having a purity of at least 95 vol.%, preferably at least 98 vol.%, more preferably at least 99 vol.%, most preferably at least 99.5 vol.%, as measured by means of gas chromatography (GC). This term is in particular used in the present disclosure for carbon dioxide and carbon monoxide having a high purity.

When high purity is used in association with syngas, the latter is seen as a highly pure mixture of CO/H₂/CO₂, i.e. a mixture substantially consisting of CO/H₂/CO₂, wherein impurities, typically O₂ and/or N₂, are comprised in the syngas for less than 5 vol. %, preferably less than 2 vol. %, more preferably less than 1 vol. %, most preferably less than 0.5 vol. %.

The term "high alkalinity solution or liquid" is used in the present disclosure for solutions or liquids having a pH value equal to or higher than 9, preferably equal to or higher than 9.5, more preferably equal to or higher than 10.

According to a first aspect of the present disclosure, there is provided a method for producing a syngas mixture as set out in the appended claims. The method for producing a syngas mixture combines the removal of carbon dioxide from the air, wherein the carbon dioxide extracted from the air is used to produce syngas.

The method for producing a syngas mixture comprises removing carbon dioxide (CO₂) from air comprising CO₂ by exposing the air to a carbon depleted alkaline catholyte capturing solution. CO₂ comprised in the exposed air is absorbed by the carbon depleted alkaline catholyte capturing solution and bicarbonate ions (HCO₃⁻) are formed, thereby obtaining a carbon enriched catholyte capturing solution comprising bicarbonate ions (HCO₃⁻). The use of carbon dioxide removed from the atmosphere (air) for the production of syngas reduces the environmental footprint of the process.

The method further comprises feeding the carbon enriched catholyte capturing solution comprising HCO₃⁻ to a catholyte compartment of an electrolyser. The electrolyser further comprises an anolyte compartment and a middle layer compartment, the latter provided between the catholyte compartment and the anolyte compartment. The anolyte compartment comprises comprising an anolyte solution . The middle layer compartment comprises a middle layer solution.

In a next step, electrolysis takes place in the electrolyser. More particularly, a first portion of the HCO₃⁻ is electrolysed, thereby forming a syngas mixture. Further, the anolyte solution is electrolysed as well, to produce protons (H⁺).

Under the impact of the electrochemical potential of the electrolyser, a second portion of the HCO₃⁻ migrates from the catholyte compartment to the middle layer compartment, and protons migrate from the anolyte compartment to the middle layer compartment.

Upon migration, the migrated bicarbonate ions and the migrated protons react, thereby acidifying the migrated HCO₃⁻ with the protons and forming CO₂, which is comprised in the middle layer solution.

Advantageously, the CO₂ formed in the acidification step has a purity of at least 95 vol.%, preferably at least 98 vol.%, more preferably at least 99 vol.%, most preferably at least 99.5 vol.%, as measured by means of gas chromatography (GC).

Advantageously, the carbon depleted alkaline catholyte capturing solution has a high alkalinity, i.e. advantageously has a pH value between 9 and 12.5, preferably between 9.5 and 12, more preferably between 10 and 12.

Advantageously, the carbon depleted alkaline catholyte capturing solution comprises one or a combination of KOH, KHCO₃ and K₂CO₃.

Advantageously, the method further comprises separating the CO₂ from the middle layer solution. Advantageously, the method further comprises feeding the (separated) middle layer solution, now devoid of CO₂, back to the middle layer compartment of the electrolyser. Feeding back the middle layer solution allows to reuse and recycle the middle layer solution, which contributes to the efficiency and the sustainability of the process, since no middle layer solution is lost or wasted.

Advantageously, the method further comprises feeding the separated CO₂ to the catholyte compartment. Upon entering the CO₂ to the catholyte compartment, it is electrochemically reduced, thereby forming carbon monoxide (CO). Advantageously, the produced CO, being part of the syngas mixture, has a high purity, i.e. a purity of at least 95 vol.%, preferably at least 98 vol.%, more preferably at least 99 vol.%, most preferably at least 99.5 vol.%, as measured by means of GC.

Advantageously, the method further comprises separating the syngas mixture from the catholyte capturing solution, thereby obtaining a carbon depleted alkaline catholyte capturing solution. Advantageously, at least a portion of the carbon depleted alkaline catholyte capturing solution is reused to remove CO₂ from air comprising CO₂, which reduces the amount of waste streams generated in the process, thereby reducing the environmental footprint of the process.

According to a second aspect of the present disclosure, there is provided a syngas mixture producing system as set out in the appended claims.

The syngas mixture producing system comprises a CO₂ capture system fluidly connected to a catholyte compartment of an electrolyser. The electrolyser further comprises an anolyte compartment and a middle layer compartment provided between the catholyte compartment and the anolyte compartment. The catholyte compartment comprises a cathode. The anolyte compartment comprises an anode.

Advantageously, the cathode is a metallic silver gas diffusion electrode (GDE).

Advantageously, the electrolyser further comprises a first membrane positioned between the catholyte compartment and the middle layer compartment. In other words, the catholyte compartment and the middle layer compartment are advantageously separated by the first membrane. Advantageously, the first membrane is permeable to negatively charged ions, in particular HCO₃⁻.

Advantageously, the electrolyser further comprises a second membrane positioned between the anolyte compartment and the middle layer compartment. In other words, the anolyte compartment and the middle layer compartment are advantageously separated by the second membrane. Advantageously, the second membrane is permeable to positively charged ions, in particular protons (H⁺).

Advantageously, the CO₂ capture system (11) comprises or substantially consists of a direct air capture system (DAC system).

Advantageously, the syngas mixture producing system further comprises a first gas-liquid separator fluidly connected to an outlet of the middle layer compartment. Advantageously, a first outlet of the first gas-liquid separator is fluidly connected to an inlet of the middle layer compartment. Advantageously, a second outlet of the first gas-liquid separator is fluidly connected to an inlet of the catholyte compartment.

Advantageously, the syngas mixture producing system further comprises a second gas-liquid separator fluidly connected to an outlet of the catholyte compartment of the electrolyser and to an inlet of the CO₂ capture system.

Optionally, yet advantageously, the syngas mixture producing system further comprises a catholyte capturing solution reservoir, which is fluidly connected to an outlet of the second gas-liquid separator and an inlet of the CO₂ capture system. In other words, when present, the catholyte capturing solution reservoir is advantageously positioned between the second gas-liquid separator and the CO₂ capture system, and is configured to, in use, store the carbon depleted alkaline catholyte capturing solution.

Alternatively or additionally, yet advantageously, the optional catholyte capturing solution reservoir is further fluidly connected to an outlet of the CO₂ capture system and an inlet of the catholyte compartment of the electrolyser. In other words, when present, the catholyte capturing solution reservoir is advantageously positioned between the CO₂ capture system and the catholyte compartment of the electrolyser, and is configured to, in use, store the carbon enriched catholyte capturing solution comprising bicarbonate ions.

### Brief description of the figures

Aspects of the invention will now be described in more detail with reference to the appended drawings, wherein same reference numerals illustrate same features and wherein:
Figure 1 schematically illustrates the operations for capturing carbon dioxide from air and producing a syngas mixture according to a first embodiment of the invention.
Figure 2 schematically illustrates the operations for capturing carbon dioxide from air and producing a syngas mixture according to a second embodiment of the invention.
Figure 3 shows a schematic representation of a syngas producing system according to the invention.
Figure 4 shows a further schematic representation of a further syngas producing system according to the invention.
Figure 5A to 5Fshow the Faradaic efficiency, the flow rate of internally produced CO₂, the pH value of the catholyte capturing solution, the syngas composition, the cell potential and the electrical conductivity, respectively, for the electrochemical CO₂ conversion to syngas over time according to a first embodiment.
Figures 6A to 6F show the flow rate of internally produced CO₂, the cell potential, the pH value of the catholyte capturing solution, the syngas composition, the carbon efficiency and the impurities in the gas comprised in the middle layer solution, respectively, for the electrochemical CO₂ conversion to syngas over time according to a second embodiment.

### Description of embodiments

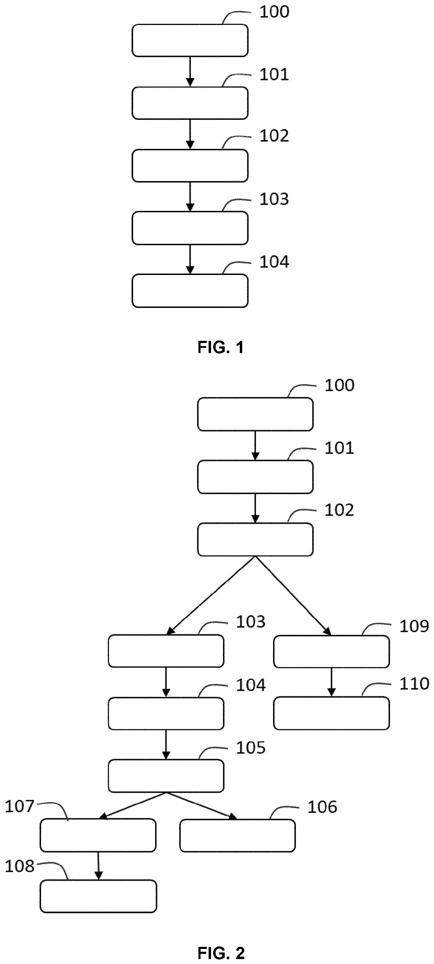

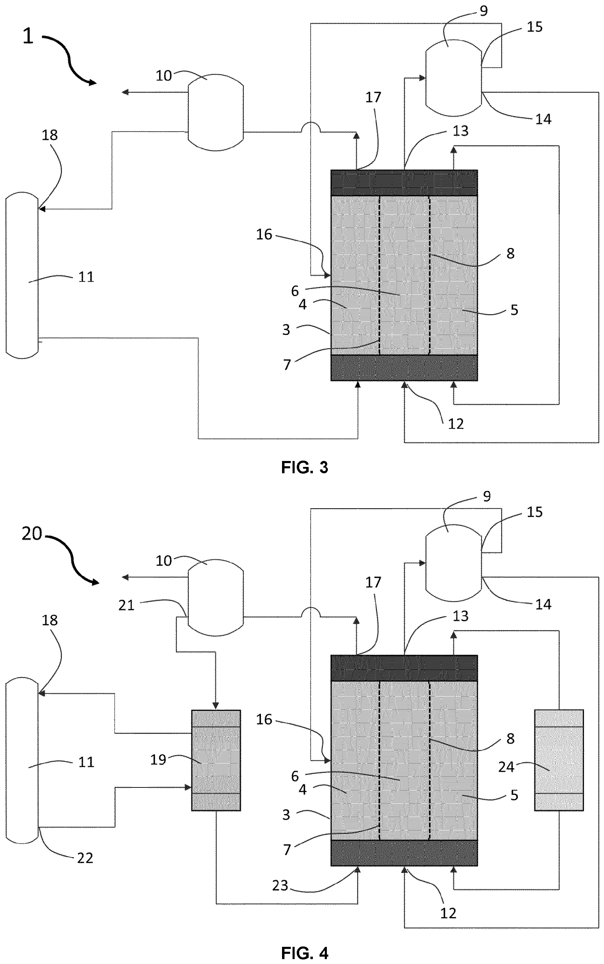

In the following paragraphs, reference is made to Fig. 1 and Fig. 2 on one hand and to Fig. 3 on the other hand, wherein Figs. 1 and 2 relate to a syngas mixture producing method of the invention and its operations (steps), and Fig. 3 to a syngas mixture producing system of the invention, configured to perform the method of Figs. 1 and 2.

The method comprises a CO₂ capture operation or step 100, performed in a CO₂ capture system 1. The CO₂ capture system 1 is configured to expose air comprising carbon dioxide to a catholyte capturing solution capable of absorbing at least a portion, and preferably substantially all, CO₂ from the air.

The catholyte capturing solution capable of absorbing CO₂ from the air is a solution with a high alkalinity and is depleted of carbon. A preferred example of such a solution is an aqueous solution comprising one or a combination of KOH, KHCO₃ and K₂CO₃.

More particularly, when the carbon depleted catholyte capturing solution has a pH between 9 and 12.5, the solution advantageously comprises KHCO₃ and K₂CO₃. When the carbon depleted catholyte capturing solution has a pH between 12.5 and 14, the solution advantageously comprises KOH and K₂CO₃. Advantageously, the carbon depleted catholyte capturing solution comprises at least KHCO₃, i.e. advantageously has a pH between 9.5 and 12.5. The inventors have discovered that when the carbon depleted catholyte capturing solution comprises at least KHCO₃, the solution has a high selectivity to CO₂.

A particularly preferred catholyte capturing solution capable of absorbing CO₂ is a KHCO₃ solution with a molarity up to 3.4 M at room temperature; in particular a KHCO₃ solution with a molarity between 0.5 M and 3.4 M, more in particular between 1 M and 3.4 M, even more in particular between 2 M and 3.4 M, such as about 3 M, wherein all molarities are taken at room temperature. The inventors have surprisingly discovered that when the catholyte capturing solution capable of absorbing CO₂ is a KHCO₃ solution, lower concentrations (molarities) allow for a higher selectivity to CO₂ absorption, and allow for a higher cell potential in the electrolyser.

Upon exposure to air comprising CO₂, CO₂ is absorbed from the air by the carbon depleted alkaline catholyte capturing solution, thereby generating bicarbonate ions (HCO₃⁻) within the solution, and obtaining a carbon enriched catholyte capturing solution. Advantageously, operation 100 is driven by the chemical affinity between the CO₂ in the air and the composition of the carbon depleted alkaline catholyte capturing solution.

Advantageously, the CO₂ capture system 1 is a direct air capture system. The direct air capture system can be any such system known in the art.

The carbon enriched catholyte capturing solution comprising bicarbonate ions is then directed into, i.e. fed to, a catholyte compartment 4 of an electrolyser 3 in a subsequent feeding operation 101. The electrolyser further comprises an anolyte compartment 5 and a middle layer compartment 6 positioned between the catholyte 4 and the anolyte 5 compartments.

The catholyte compartment 4 comprises a cathode. The cathode can be any anode known in the art for electrolysis. A preferred example of a suitable cathode within the catholyte compartment 4 is a metallic silver gas diffusion electrode (GDE).

The anolyte compartment 5 comprises an anode. The anode can be any anode known in the art for electrolysis. The anolyte compartment further comprises an anolyte solution capable of forming protons (H⁺) when electrolysed. A preferred example of a suitable anolyte solution is an aqueous solution comprising H₂SO₄, for example a 0.5 M to 3 M H₂SO₄ solution, preferably a 0.75 M to 2 M H₂SO₄ solution, more preferably a 0.5 M H₂SO₄ solution.

The middle layer compartment (6) comprises a middle layer solution. A preferred example of such a solution is an aqueous solution comprising one or a combination of KOH, KHCO₃ and K₂CO₃. Advantageously, the carbon depleted catholyte capturing solution comprises at least KHCO₃. The inventors have discovered that when the carbon depleted catholyte capturing solution comprises at least KHCO₃, the solution has a high selectivity to CO₂. The inventors have surprisingly discovered that higher concentrations (molarities) allow for a higher flow of protons to the middle layer compartment, thereby increasing the efficiency of the method and the system.

A particularly preferred middle layer solution is a KHCO₃ solution with a molarity up to 3.4 M at room temperature; in particular a KHCO₃ solution with a molarity between 0.5 M and 3.4 M, more in particular between 1 M and 3.4 M, even more in particular between 2 M and 3.4 M, such as about 2 M, wherein all molarities are taken at room temperature. The inventors have surprisingly discovered that when the middle layer solution is a KHCO₃ solution, lower concentrations (molarities) allow for a higher selectivity to CO₂ absorption, and allow for a higher cell potential in the electrolyser.

The carbon enriched catholyte capturing solution comprising bicarbonate ions in the catholyte compartment (4) is electrolysed during an electrolysis operation 102. More particularly, a first portion of the bicarbonate ions comprised in the carbon enriched catholyte capturing solution are subjected to an electrochemical reaction facilitated by the electrolyser's electrodes (anode and cathode). The electrochemical reaction converts these bicarbonate ions into a mixture of hydrogen, carbon monoxide (CO), and a smaller proportion of carbon dioxide, collectively known as syngas. This syngas can be used as a fuel gas in various applications for energy generation.

Advantageously, the electrolysis operation 102 achieves a carbon efficiency of approximately 80%, wherein the carbon efficiency is defined as the portion of the carbon in the bicarbonate that converted into syngas components.

The electrolysis operation 102 further also includes the electrolysis of the anolyte solution in the anolyte compartment 5 of the electrolyser 3, thereby generating protons.

Next, a second portion of the bicarbonate ions comprised in the carbon enriched catholyte capturing solution migrate during a migration operation 103 from the catholyte compartment 4 to the middle layer compartment 6, i.e. into the middle layer solution.

Simultaneously with the migration of the bicarbonate ions, the migration operation 103 further comprises migration of protons from the anolyte compartment 5 to the same middle layer compartment 6, i.e. into the middle layer solution.

Advantageously, the migration operation 103 takes place because of an electrochemical gradient present within the electrolyser's compartments 4, 5, 6.

Advantageously, the electrolyser 3 further comprises a first membrane 7 positioned between the catholyte compartment 4 and the middle layer compartment 6. In other words, the first membrane 7 separates the catholyte capturing solution from the middle layer solution. When the electrolyser 3 comprises such a first membrane 7, migrating bicarbonate ions pass from the catholyte compartment 4 through the first membrane 7 into the middle layer compartment 6. In other words, the first membrane 7 is permeable to bicarbonate ions. More particularly, the bicarbonate ions migrate through the first membrane 7 due to an electrochemical gradient established across the first membrane 7.

Advantageously, the first membrane 7 is an anion exchange membrane (AEM), i.e. a membrane that is permeable to negatively charged ions. Advantageously, the first membrane is impermeable to positively charged ions. Otherwise said, the first membrane 7 is advantageously a selective membrane that permits only negatively charged ions to move through while blocking other ions.

Advantageously, the selective permeability of the first membrane 7 is realised by the ionic properties thereof. Advantageously, the first membrane 7 comprises or substantially consists of a polymer matrix comprising fixed positive charges suitable to attract and allow the passage of negatively charged ions while repelling positively charged ions.

Advantageously, the electrolyser 3 further comprises a second membrane 8 positioned between the anolyte compartment 5 and the middle layer compartment 6. In other words, the second membrane 8 separates the anolyte solution from the middle layer solution. When the electrolyser 3 comprises such a second membrane 8, migrating protons pass from the anolyte compartment 5 through the second membrane 8 into the middle layer compartment 6. In other words, the second membrane 8 is permeable to protons. More particularly, the protons migrate through the second membrane 8 due to an electrochemical gradient established across the second membrane 8.

Advantageously, the second membrane 8 is a cation exchange membrane (CEM), i.e. a membrane that is permeable to positively charged ions. Otherwise said, the second membrane 8 is advantageously a selective membrane that permits only positively charged ions to move through while blocking other ions.

Advantageously, the selective permeability of the second membrane 8 is realised by the ionic properties thereof. Advantageously, the second membrane 8 comprises or substantially consists of a polymer matrix comprising fixed negative charges suitable to attract and facilitate the passage of cations such as protons while repelling negatively charged ions.

Advantageously, the first membrane 7 and the second membrane 8 have an excellent chemical stability so as to withstand the electrolytic environment, and sufficient mechanical strength to maintain their structure during operation. Further, the first and second membranes 7, 8 advantageously have a high resistance to fouling. As will be understood, fouling of the membranes 7, 8 can negatively affect the efficiency of migration operation 103 and any subsequent process operations, and can lead to energy losses.

The presence of the first and second membranes 7, 8 having a selective permeability facilitates the migration operation 103.

Upon migration of bicarbonate ions and protons to the middle layer compartment, acidification 104 of the bicarbonate ions with the protons takes place. This acidification operation 104 produces carbonic acid, which decomposes to CO₂ and water. In other words, the acidification operation 104 leads to a middle layer solution comprising CO₂ and water. The acidification reaction is represented by the equation: H⁺ + HCO₃⁻ → CO₂ + H₂O. This reaction is facilitated by a concentration gradient of protons and bicarbonate ions.

The inventors have discovered that an electrolyser 3 comprising a middle layer compartment 6 as described above creates an environment separated from the catholyte compartment 4 of the electrolyser where the interaction of bicarbonate ions and protons can occur without negatively influencing the syngas production during the electrolysis operation 102. This is further enhanced by the presence of the first and second membranes 7, 8. In particular, the acidification reaction is further facilitated by an electrochemical potential across the membranes 7, 8.

The efficiency of the acidification step 104 depends on, without being limited thereto, the properties of the optional first and second membranes 7, 8, the concentration of ions, and the design of the electrolyser's middle layer liquid compartment 6.

Advantageously, the electrolysis operation 102, the migration operation 103 and the acidification operation 104 are performed simultaneously in the electrolyser 3.

Now referring to Fig. 2 and Fig. 3, and no longer to Fig. 1, the method of the present invention can further comprise a separation operation 105. The separation operation 105 is advantageously performed in a first gas-liquid separator 9. The first gas-liquid separator 9 can be any separator known in the art to separate gas dissolved in a liquid from the liquid.

The separation operation 105 comprises separating the carbon dioxide formed in the middle layer solution during the acidification operation 104 from the middle layer solution. Advantageously, and depending on the type of gas-liquid separator used, the separation operation 105 typically comprises manipulating physical conditions such as pressure and/or temperature, so as to cause the dissolved carbon dioxide to form bubbles and rise to an upper section of the first gas-liquid separator 9.

Advantageously, following the separation operation 105, the method further comprises a feeding operation 106, wherein the resulting carbon dioxide depleted middle layer solution is recirculated (i.e. fed) back to the middle layer compartment 6 of the electrolyser 3. This recirculation operation 106 allows to maintain the supply of "fresh", i.e. CO₂ depleted, middle layer solution for the ongoing acidification operation 104. Consequently, no middle layer solution is wasted, which results in the efficient utilization thereof, thereby reducing the environmental footprint of the method and system, and increasing its sustainability.

Advantageously, following the separation operation 105, the method further comprises a step 107, which involves the process of transferring the separated carbon dioxide to the catholyte compartment 4 of the electrolyser 3, where it undergoes electrochemical reduction to CO at the cathode in a reduction operation 108. The cathode, in particular a GDE, provides a surface area for the reduction reaction 108, allowing for interaction between CO₂ and the electrode surface. The CO₂ reacts with electrons, which are advantageously supplied by an external circuit of the electrolyser 3, to form CO. The reduction reaction is driven by the applied potential across the electrolyser 3 and is characterized by a Faradaic efficiency, indicating the proportion of electrons used for the desired reaction to produce CO. The carbon efficiency signifies the effectiveness of converting the carbon content of the CO₂ into the desired syngas components.

CO is a syngas component, so operations 107 and 108 enhance the syngas production. Further, since CO₂ produced in operation 104 advantageously has a high purity, i.e. a purity of at least 95 vol.%, preferably at least 98 vol.%, more preferably at least 99 vol.%, most preferably at least 99.5 vol.%, as measured by means of gas chromatography (GC), the resulting CO also has a high purity, i.e. has a purity of at least 95 vol.%, preferably at least 98 vol.%, more preferably at least 99 vol.%, most preferably at least 99.5 vol.%, as measured by means of GC, thereby maximizing the efficiency of the syngas production process of the invention.

The method further advantageously comprises a separation step 109, wherein the syngas is separated from the catholyte capturing solution, resulting in a catholyte capturing solution with reduced carbon content, i.e. the carbon depleted alkaline catholyte capturing solution. The separation operation 109 is advantageously performed in a second gas-liquid separator 10. The second gas-liquid separator 10 can be any separator known in the art to separate gas dissolved in a liquid from the liquid.

Advantageously, and depending on the type of gas-liquid separator used, the separation operation 109 typically comprises manipulating physical conditions such as pressure and/or temperature, which allows the gases to be released from the liquid solution.

Advantageously, following the separation operation 109, the method further comprises a transferring operation 110 wherein at least a portion, and preferably all, of the syngas depleted and carbon depleted alkaline catholyte capturing solution is recirculated back to the CO₂ capture system 1, where it can be reused in a next CO₂ capture operation 100. This recirculation operation 110 enhances the overall efficiency and sustainability of the process, since less solution is wasted/discarded.

Referring now to Fig. 4, the syngas mixture producing system 20 can further comprise a catholyte capturing solution reservoir 19. The catholyte capturing solution reservoir is configured to, in use, store catholyte capturing solution. More particularly, operation 110 can comprise a sub-step (not shown in Fig. 2) of transferring the carbon depleted alkaline catholyte capturing solution from the second gas-liquid separator 10 to the catholyte capturing solution reservoir 19, and a sub-step (not shown in Fig. 2) of transferring at least a portion of the carbon depleted alkaline catholyte capturing solution from the reservoir 19 to the CO₂ capture system 1.

Additionally or alternatively, yet advantageously, the operation 101 can comprise a sub-step (not shown in Figs. 1 and 2) of transferring the carbon enriched catholyte capturing solution from the CO₂ capture system 1 to the catholyte capturing solution reservoir 19, and a sub-step (not shown in Figs. 1 and 2) of transferring at least a portion of the carbon enriched catholyte capturing solution from the reservoir 19 to the catholyte compartment 4 of the electrolyser 3.

Advantageously, the catholyte capturing solution reservoir 19 is capable of maintaining a steady flow of the catholyte capturing solution, thereby contributing to the efficiency of the system and entire process.

The syngas mixture producing system can further comprise an anolyte reservoir 24, configured to store a portion of the anolyte solution, thereby allowing an optimal amount of anolyte solution being present in the anolyte compartment 5 of the electrolyser 3.

Advantageously, the method and system of the present invention allow to produce syngas comprising between 40 and 60 vol.% of hydrogen, between 40 and 30 vol.% of CO and between 25 and 10 vol. % carbon dioxide, such as 50 vol.% H₂, 40 vol.% CO and 10 vol.% CO₂.

### Example

### Example 1

A 4-layer flow cell separated by an Ag-based gas diffusion electrode (GDE), and comprising a cation exchange membrane (CEM, Nafion 117) and an anion exchange membrane (AEM, Fumasep FAA-3-50) was used as electrolyser.

5L of a 2 M KHCO₃ solution was used as carbon depleted alkaline catholyte capturing solution, and was refreshed between the Ag GDE and the CEM. 5L of a 0.5 M H₂SO₄ was used as the anolyte solution and was refreshed between the AEM and anode (DSA plate). 0.5L of a 2 M KHCO₃ solution was used as middle layer solution and was refreshed between the CEM and AEM.

In a first experiment substantially pure carbon dioxide was supplied to the catholyte compartment containing the 2 M KHCO₃ solution as carbon depleted alkaline catholyte capturing solution. The influence of the flow rate of the CO₂ delivery on the selectivity of the metallic Ag-based gas diffusion electrode (GDE) cathode for the CO₂ conversion to syngas was tested by applying a constant current density of 100 mA.cm⁻¹. The external CO₂ supply to the catholyte compartment and thus to the cathode was stepwise (every 20 hours) reduced from 50 mL.min⁻¹ to 0 mL.min⁻¹ in steps of 10 mL.min⁻¹. In addition to the external supply of substantially pure CO₂, the CO₂ internally generated in the middle layer compartment was, after separation from the middle layer solution, also consistently supplied to the cathode. Electrolysis was performed for a duration of almost 540 hours, wherein from 100 hours testing on the external carbon dioxide supply was stopped.

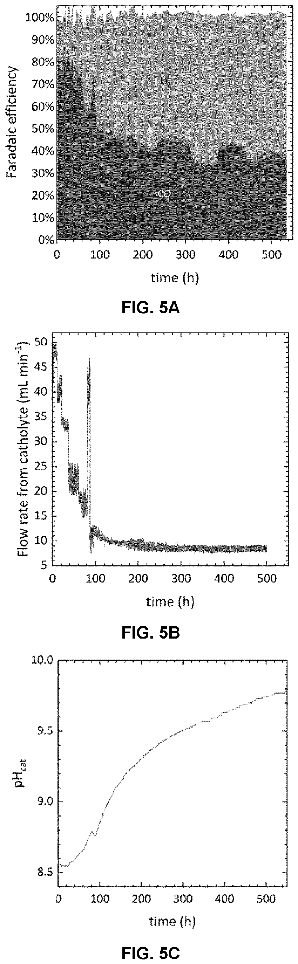

The Faradaic efficiency for CO production of the system was measured in function of the electrolysis duration. Fig. 5A shows the results, from where it is clear that as long as at least 20 mL.min⁻¹ external CO₂ was fed into the system, only a limited impact on the Faradaic efficiency for CO was noticed, which was maintained at about 78 % (with a Faradaic efficiency for hydrogen of about 22 %). Once the external CO₂ dropped to 10 mL.min⁻¹, the Faradaic efficiency for CO dropped as well, to a value about 55 %. Once the external CO₂ dropped to 0 mL.min⁻¹, the Faradaic efficiency for CO further decreased but remained relatively constant at a value around 45 %. This means that to guarantee a sufficiently high Faradaic efficiency for CO, a minimal external CO₂ supply is required. It will be understood that this supply can come from CO₂ captured (removed) from air, while in the experiment a flow of substantially pure CO₂ was used for analysis reasons.

It was further noticed that after shutting down the external CO₂ supply (from 100 hours onwards), the CO₂ reduction reaction in the catholyte compartment (at the cathode) was maintained solely by the internally generated CO₂ gas supply (generated in the middle layer solution by acidification of bicarbonate ions), at a constant flow rate of about 15 mL.min⁻¹ (Fig. 5B). The flow rate of the gases separated from the middle layer solution and of the syngas produced in the catholyte compartment was measured by means of a volumetric flow meter (supplied: BPC).

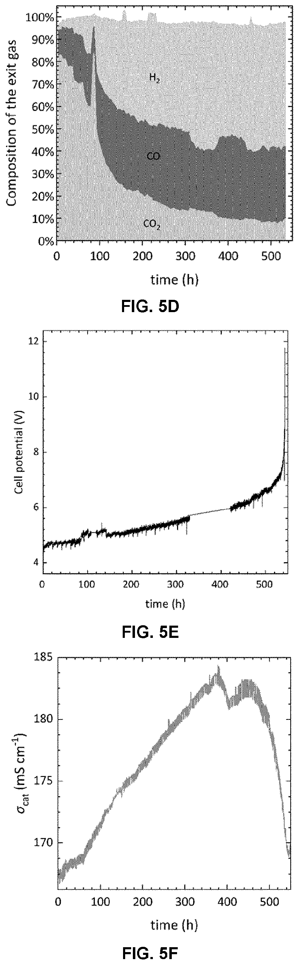

It was also noticed that during the electrolysis reaction, as the reaction proceeded, the pH of the catholyte capturing solution started to increase gradually to a value of 9.8 (Fig. 5C). The pH of the catholyte capturing solution was measured by a Hach PHC301 probe. With increasing pH, the ability for the catholyte capturing solution to absorb unreacted CO₂ on the cathode increases. Therefore, the concentration of unreacted CO₂ escaping the catholyte chamber as component of the syngas, as shown in Fig. 5D, decreased. It was further noticed that shortly after the external CO₂ supply was stopped, the syngas composition was rich in hydrogen (between 45 % and 60 %) and carbon monoxide (between 30 % and 50 %). The composition of the gases separated from the middle layer solution and of the syngas produced in the catholyte compartment were analysed by gas chromatography.

It was also noticed that the cell potential increased from 4.5 V to around 7 V after 500 hours of experiment (see Fig. 5E). It is believed that this is due to the dilution of middle layer solution, which is caused by the water production upon acidification of the bicarbonate ions with protons. This is further confirmed by an abrupt change in the electrical conductivity caused by said dilution from 100 hours onwards (the moment the external supply of carbon dioxide was stopped) (Fig. 5F). Electrochemical tests were conducted using a VMP3 potentiostat (supplier: BioLogic). The electrical conductivity was measured by a CDC401 probe.

### Example 2

A 4-layer flow cell separated by a further Ag-based gas diffusion electrode (GDE) comprising 10 wt.% less argon as compared to the GDE of Example 1, and comprising a cation exchange membrane (CEM, Nafion 117) and an anion exchange membrane (AEM, Fumasep FAA-3-50) was used as electrolyser.

5L of a 2 M KHCO₃ solution was used as carbon depleted alkaline catholyte capturing solution, and was refreshed between the Ag GDE and the CEM. 5L of a 0.5 M H₂SO₄ was used as the anolyte solution and was refreshed between the AEM and anode (DSA plate). 0.5L of a 2 M KHCO₃ solution was used as middle layer solution and was refreshed between the CEM and AEM.

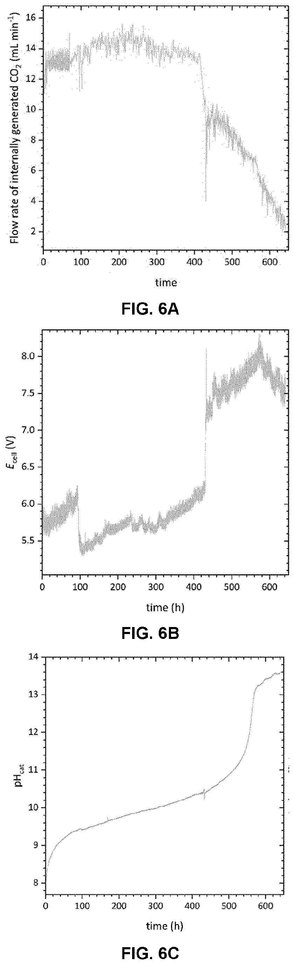

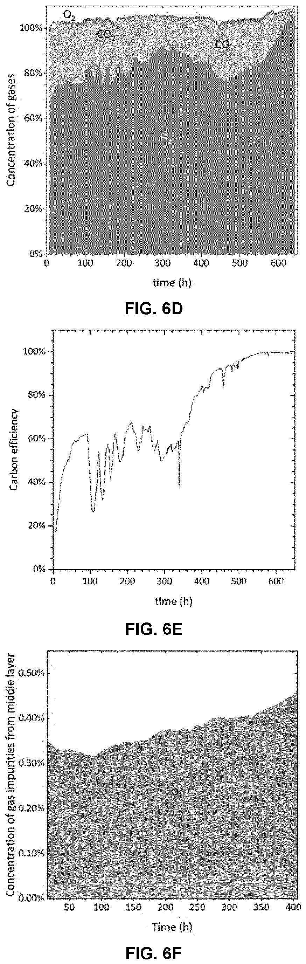

Electrolysis was performed for a duration of 650 hours at a constant current density of 100 mA.cm⁻¹, and without an external supply of CO₂. In other words, the CO₂ supply to the cathode and the catholyte compartment in Example 2 consisted solely of the CO₂ generated by acidification of bicarbonate ions and released from the middle layer solution. Similarly to Example 1, it was again noticed that in absence of an external supply of carbon dioxide, the dilution of the middle layer solution will ultimately result in a reduction of the release of CO₂ from this middle layer solution. This is visible from the drop after more than 400 hours of continuous operation in Fig. 6A, resulting in an increase in the cell potential (Fig. 6B). Further, an increase in pH of the catholyte capturing solution was measured (Fig. 6C), which prevents CO₂ from escaping from the catholyte capturing solution, as demonstrated by the analysis of the syngas composition released from the cathode/catholyte compartment over time (Fig. 6D). From Fig. 6D it is clear that the CO₂ fraction gradually decreases over time, with a corresponding increase in carbon efficiency (Fig. 6E). The gas composition coming from the middle layer solution was also analysed. Fig. 6F shows the impurities over time, wherein the impurities over time to not exceed 0.5 vol.%. In other words, high purity CO₂ gas was produced by acidification of bicarbonate ions in the middle layer solution.

## Claims

1. A method for producing a syngas mixture, comprising:
- Removing (100) carbon dioxide (CO₂) from air comprising carbon dioxide by exposing the air to a carbon depleted alkaline catholyte capturing solution, thereby obtaining a carbon enriched catholyte capturing solution comprising bicarbonate ions (HCO₃⁻),
- feeding (101, 101a, 101b) the carbon enriched catholyte capturing solution comprising HCO₃⁻ to a catholyte compartment (4) of an electrolyser (3), the electrolyser (3) further comprising an anolyte compartment (5) comprising an anolyte solution and a middle layer compartment (6) provided between the catholyte compartment (4) and the anolyte compartment (5) and comprising a middle layer solution,
- electrolysing (102) a first portion of the HCO₃⁻, thereby forming a syngas mixture, and electrolysing the anolyte solution to produce protons (H⁺),
**characterized in that** the method further comprises
- migrating (103) a second portion of the HCO₃⁻ from the catholyte compartment (4) to the middle layer compartment (6), and migrating protons from the anolyte compartment (5) to the middle layer compartment (6), wherein the migration step (103) is driven by the electrochemical potential of the electrolyser (3),
- in the middle layer compartment (6), acidifying (104) the migrated HCO₃⁻ with the protons, thereby forming CO₂, wherein the CO₂ is comprised in the middle layer solution.

2. The method according to claim 1, wherein the CO₂ formed in the acidification step (104) has a purity of at least 95 vol.%, preferably at least 98 vol.%, more preferably at least 99 vol.%, most preferably at least 99.5 vol.%, as measured by means of gas chromatography (GC).

3. The method according to any one of the preceding claims, wherein the carbon depleted alkaline catholyte capturing solution has a pH value between 9 and 12.5..

4. The method according to any one of the preceding claims, wherein the carbon depleted alkaline catholyte capturing solution comprises one or a combination of KOH, KHCO₃ and K₂CO₃.

5. The method according to any one of the preceding claims, further comprising separating (105) the CO₂ from the middle layer solution.

6. The method according to claim 5, further comprising feeding (106) the middle layer solution devoid of CO₂ to the middle layer compartment (6) of the electrolyser (3).

7. The method according to claim 5 or claim 6, further comprising feeding (107) the separated CO₂ to the catholyte compartment (4) and electrochemically reducing (108) the CO₂, thereby forming carbon monoxide (CO).

8. The method according to claim 7, wherein the CO has a purity of at least 95 vol.%, preferably at least 98 vol.%, more preferably at least 99 vol.%, most preferably at least 99.5 vol.%, as measured by means of GC.

9. The method according to any one of the preceding claims, further comprising separating (109) the syngas mixture from the catholyte capturing solution, thereby obtaining a carbon depleted alkaline catholyte capturing solution, wherein at least a portion of the carbon depleted alkaline catholyte capturing solution is reused to remove (100) CO₂ from air comprising CO₂.

10. A syngas mixture producing system (1, 20), comprising a CO₂ capture system (11) fluidly connected to a catholyte compartment (4) of an electrolyser (3), the electrolyser (3) further comprising an anolyte compartment (5) comprising an anode and a middle layer compartment (6) provided between the catholyte compartment (4) and the anolyte compartment (5), wherein the catholyte compartment (4) comprises a cathode.

11. The syngas mixture producing system (1, 20) according to claim 10, wherein the electrolyser (3) further comprises a first membrane (7) positioned between the catholyte compartment (4) and the middle layer compartment (6), wherein the first membrane (7) is permeable to negatively charged ions, in particular to HCO₃⁻.

12. The syngas mixture producing system (1, 20) according to claim 10 or claim 11, wherein the electrolyser (3) further comprises a second membrane (8) positioned between the anolyte compartment (5) and the middle layer compartment (6), wherein the second membrane (8) is permeable to positively charged ions, in particular to protons (H⁺).

13. The syngas mixture producing system (1, 20) according any one of claims 10 to 12, wherein the CO₂ capture system (11) comprises a direct air capture system.

14. The syngas mixture producing system (1, 20) according to any one of claims 10 to 13, further comprising a first gas-liquid separator (9) fluidly connected to an outlet (13) of the middle layer compartment (6), wherein a first outlet (14) of the first gas-liquid separator (9) is fluidly connected to an inlet (12) of the middle layer compartment (6) and wherein a second outlet (15) of the first gas-liquid separator (9) is fluidly connected to an inlet (16) of the catholyte compartment (4).

15. The syngas mixture producing system (1, 20) according to any one of claims 10 to 14, further comprising a second gas-liquid separator (10) fluidly connected to an outlet (17) of the catholyte compartment (4) of the electrolyser (3) and to an inlet (18) of the CO₂ capture system (11).

16. The syngas mixture producing system (20) according to claim 15, further comprising a catholyte capturing solution reservoir (19), wherein the catholyte capturing solution reservoir (19) is fluidly connected to an outlet (21) of the second gas-liquid separator (10), to an outlet (22) of the CO₂ capture system (11), to an inlet (18) of the CO₂ capture system (11) and to an inlet (23) of the catholyte compartment (4) of the electrolyser (3).

17. The syngas mixture producing system according to any one of claims 10 to 16, wherein the cathode is a metallic silver gas diffusion electrode (GDE).
